# EUROPÄISCHE PATENTANMELDUNG

(11) **EP 0 857 596 A2**
(43) Veröffentlichungstag der Anmeldung: **12.08.1998**
(21) Anmeldenummer: 98101433.5
(22) Anmeldetag: 28.01.1998
(51) Int. Cl.: B60J 7/12, B60J 7/06

(54) **Flexibles Verdeck eines Fahrzeugs**

(30) Priorität: 05.02.1997 DE 19704173
(71) Anmelder: WEBASTO KAROSSERIESYSTEME GmbH, D-82131 Stockdorf (DE)
(72) Erfinder: Hirschvogel, Engelbert, 86928 Hofstetten (DE); Mayer, Johann, 85238 Petershausen (DE); Rau, Achim, 73434 Aalen (DE)
(74) Vertreter: Wiese, Gerhard

(57) **Zusammenfassung**

Die Erfindung betriff ein flexibles Verdeck (1) eines Fahrzeugs mit einem Verdeckstoff (2), der wenigstens eine Schicht (4) aus einem schweißbaren Kunststoff aufweist, und mit wenigstens einem Festelement (5, 6, 7), an dem der Verdeckstoff (2) befestigt ist. Um eine kostengünstige und modulare Vorstellbarkeit eines flexiblen Verdecks zu gewährleisten, ist erfindungsgemäß vorgesehen, daß das Festelement (5, 6, 7) an wenigstens einer Fläche eine Schicht (25, 26, 27) aus einem mit der Kunststoff-Schicht (4) des Verdeckstoffs (2) direkt verschweißbaren Kunststoff aufweist.

## Beschreibung

Die Erfindung bezieht sich auf ein flexibles Verdeck eines Fahrzeugs mit einem Verdeckstoff, der wenigstens eine Schicht aus einem schweißbaren Kunststoff aufweist, und mit wenigstens einem Festelement als Strukturelement an dem der Verdeckstoff befestigt ist.

Derartige flexible Verdecke werden bei Cabriolets oder Faltdächern eingesetzt. Dabei sind Verdeckstoffe bekannt, die außer einer Deckschicht aus einem textilen Trägergewebe auch eine innenliegende Schicht aus einem schweißbaren Kunststoff aufweisen. Die Befestigung derartiger Verdeckstoffe an Festelementen und Spriegeln erfolgte bisher entweder durch mechanisches Einklemmen, durch relativ aufwendiges flächiges Ankleben (wie bei der DE 40 39 888 A1) oder durch Einstecken der Festelemente in relativ großvolumige, doppelwandige Verdeckstoff-Taschen.

Der vorliegenden Erfindung liegt die Aufgabe zugrunde, ein flexibles Verdeck eines Fahrzeugs zu schaffen, dessen Herstellung wesentlich vereinfacht und verbilligt wird.

Diese Aufgabe wird erfindungsgemäß dadurch gelöst, daß das Festelement an wenigstens einer Fläche eine Schicht aus einem mit der Kunststoff-Schicht des Verdeckstoffs direkt verschweißbaren Kunststoff aufweist. Vorteilhafte Ausgestaltungen der Erfindung sind den Unteransprüchen zu entnehmen.

Durch die erfindungsgemäße Auslegung erfolgt eine unmittelbare Verbindung des Festelementes mit dem Verdeckstoff. Dadurch, daß die Festelemente durch das Vorsehen einer direkt verschweißbaren Beschichtung auf eine Verbindung mit dem Verdeckstoff vorbereitet sind, kann eine derartige Verbindung sowohl hinsichtlich der Anordnungsstelle am Verdeck als auch hinsichtlich der Fertigungsstation im Fertigungsablauf völlig flexibel gehandhabt werden. Dadurch wird die Modularität eines Verdecks wesentlich erhöht. Vorbereitete Festelemente, die gegebenenfalls für die Breite und Dachwölbung eines Fahrzeugs entsprechend abgelängt und vorgewölbt werden, können mit einem an die Länge des jeweiligen Dachausschnittes angepaßten Zuschnitt des Verdeckstoffs eventuell sogar direkt am Fahrzeug verschweißt werden.

Aufgrund des thermoplastischen Verhaltens einer schweißbaren Schicht ist es vorteilhaft, wenn der Verdeckstoff nicht nur aus dieser Schicht besteht, sondern diese - wie an sich bekannt - an einem textilen Trägergewebe angeordnet ist.

Dabei kann die Anordnung entweder so erfolgen, daß die Schicht an der Unterseite des Verdeckstoffs angeordnet ist oder daß diese an der Oberseite derselben angeordnet und mit darüberliegenden, lamellenförmigen Festelementen verschweißt ist.

Für eine definierte Begrenzung des Verbindungsbereiches zwischen Verdeckstoff und Festelementen ist es vorteilhaft, wenn diese eine Aussparung zur Aufnahme der verschweißbaren Kunststoff-Schicht aufweisen.

Die verschweißbare Kunststoff-Schicht wird am Festelement vorzugsweise in Form eines Zweikomponenten-Spritzgießverfahrens erzeugt. Dabei wird zunächst der Grundkörper des jeweiligen Festelements aus einem Grundwerkstoff mit vorzugsweise höheren Festigkeitswerten, gegebenenfalls unter Einlage von Kohlefasern oder Stahlteilen als Armierung in einer Form gespritzt und dann nach Zurückziehen eines Schiebers an der Werkzeugform die verschweißbare Kunststoff-Schicht als zweite Komponente unmittelbar in derselben Form angespritzt. Durch ein derartiges Verfahren lassen sich Festelemente in großen Stückzahlen kostengünstig vorfertigen.

Gemäß einer Ausführungsform der Erfindung ist vorgesehen, daß die Schicht am Verdeckstoff aus Polyvinylchlorid (PVC) besteht. Hierfür ist als Ergänzung vorteilhafterweise vorgesehen, daß auch die verschweißbare Kunststoff-Schicht am Festelement aus Polyvinylchlorid (PVC) besteht. Es sind jedoch auch alle anderen Arten von schweißbaren thermoplastischen Kunststoffen für eine Paarung als Schicht am Verdeckstoff und am Festelement geeignet, die sich unter Wärmeeinwirkung und Druck verbinden. Das Verschweißen der Schichten erfolgt nach einem der bekannten Kunststoff-Schweißverfahren durch Heißpress-, Hochfrequenz-, Infrarot- oder Ultraschallschweißen.

Nachfolgend sind Ausführungsbeispiele der Erfindung anhand der Zeichnung beschrieben. Es zeigt:
- Fig. 1: einen schematischen Längsschnitt durch ein flexibles Verdeck mit obenliegendem Verdeckstoff und
- Fig. 2: ein flexibles Verdeck mit untenliegendem Verdeckstoff und lamellenförmigen Deckkörpern.

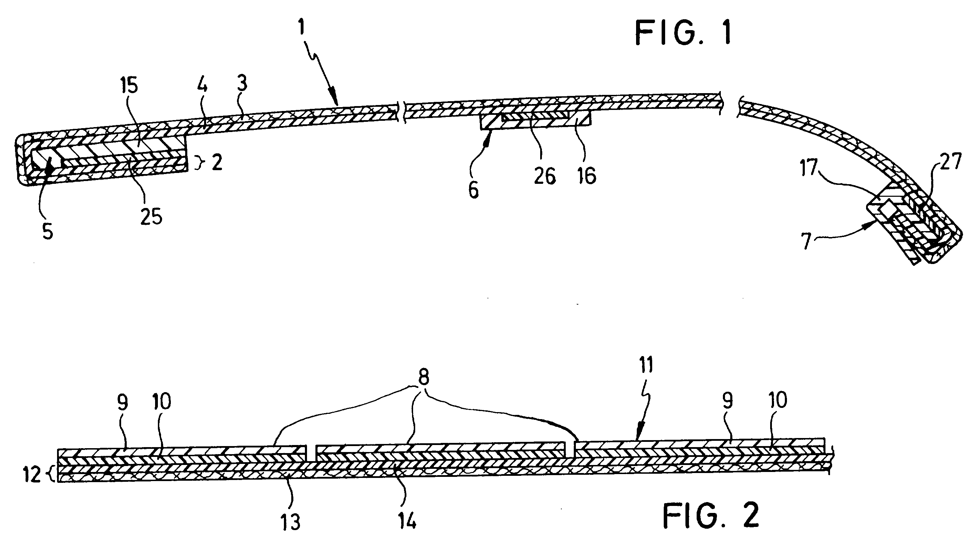

In Fig. 1 ist ein flexibles Verdeck 1 dargestellt, welches entweder bei einem Cabrioletfahrzeug oder einem Fahrzeug mit festem Dachaufbau und einem in eine Dachöffnung eingesetzten Faltverdeck zum Einsatz kommt. Das Verdeck 1 besteht aus einem außenliegenden Verdeckstoff 2, der seinerseits aus einem an der Oberseite angeordneten textilen Trägergewebe 3 und einer an der Unterseite desselben angeordneten Schicht 4 aus einem schweißbaren Kunststoff, beispielsweise Polyvinylchlorid (PVC) besteht.

Der Verdeckstoff 2 ist an seiner Vorderseite mit einem vorderen Festelement 5, an seiner Hinterseite mit einem hinteren Festelement 7 und dazwischen mit vorzugsweise mehreren der Aussteifung dienenden spriegelförmigen mittleren Festelementen 6 verbunden. Die Festelemente 5, 6 und 7 bestehen jeweils aus einem Grundkörper 15, 16 bzw. 17, der vorzugsweise aus einem Kunststoff hoher Festigkeit, wie beispielsweise glasfaserverstärkten Polyamid besteht. Falls erforderlich, können in die Grundkörper 15, 16 und 17 zusätzliche metallische Aussteifungsteile eingebettet sein.

Die Festelemente 5, 6 und 7 weisen an wenigstens einer Fläche eine Schicht 25, 26 bzw. 27 aus einem mit der Schicht 4 des Verdeckstoffs 2 unmittelbar verschweißbaren Kunststoff auf. Am vorderen Festelement 5 ist die Schicht 25 in eine entsprechend geformte Aussparung am Grundkörper 15 eingespritzt.

Am mittleren Festelement 6 ist die Schicht 26 in eine an der Oberseite im mittleren Bereich vorgesehene Aussparung des Grundkörpers 16 eingespritzt. Das hintere Festelement 7 weist an der Oberseite seines Grundkörpers 17 eine Aussparung auf, die durch die Schicht 27 ausgefüllt wird. Wenn vorstehend von wenigstens einer mit einer schweißbaren Kunststoff-Schicht versehenen Fläche an den Festelementen gesprochen wird, so versteht sich, daß auch mehrere Flächen mit einer derartigen Schicht versehen sein können, daß im Extremfall der Grundkörper sogar von einer derartigen Schicht vollständig ummantelt sein kann.

Grundkörper 15, 16 und 17 und Schichten 25, 26 und 27 werden vorzugsweise in einem Zweikomponenten-Spritzgießverfahren gefertigt. Dabei ist in einer der späteren Außenkontur des Festelements 5, 6 und 7 entsprechenden Form die Aussparung für die Schichten 25, 26 und 27 zunächst durch einen Schieber verschlossen. Nachdem der Grundkörper 15, 16 und 17 aus dem festeren ersten Werkstoff gespritzt ist, wird dieser Schieber gezogen und sofort anschließend die Schicht 25, 26 und 27 als zweite Komponente in die frei werdende Aussparung gespritzt. In einem derartigen Prozess lassen sich Festelemente für flexible Verdecke in großen Stückzahlen kostengünstig vorfertigen. Da die Festelemente durch das Versehen mit der schweißbaren Beschichtung für eine Verbindung mit einem Verdeckstoff flexibel vorbereitet sind, können flexible Verdecke sowohl hinsichtlich der entgültigen Abmaße als auch des Ortes ihrer Herstellung sehr variabel hergestellt werden. Die Verbindung der Schichten 25, 26 und 27 an den Festelementen 5, 6 und 7 mit der Schicht 4 am Verdeckstoff 2 erfolgt vorzugsweise durch Heißpress-Schweißen, Hochfrequenz-Schweißen, Infrarot-Schweißen oder Ultraschall-Schweißen. In jedem Falle erfolgt eine flächige Verbindung zwischen Verdeckstoff und Festelement ohne jeden Zusatzwerkstoff, wie beispielsweise Kleber. Die Herstellung eines derartigen Verdecks wird dadurch erheblich kostengünstiger.

In einem zweiten Ausführungsbeispiel gemäß Fig. 2 weist ein Verdeckstoff 12 ein untenliegendes textiles Trägergewebe 13 und eine darauf angeordnete Schicht 14 aus einem schweißbaren Kunststoff auf. Die Festelemente sind dort nach Art von Lamellen 8 ausgebildet, die in relativ geringem Abstand hintereinander an der Oberseite des Verdeckstoffs 12 angeordnet und über eine, an der Unterseite ihres Grundkörpers 9 flächig vorgesehene Schicht 10 aus schweißbaren Kunststoff unmittelbar mit der Schicht 14 verschweißt werden. Das zweite Ausführungsbeispiel bietet somit die Möglichkeit, ein Lamellendach äußerst kostengünstig herzustellen. Ein derartiges Verdeck 11 weist bei entsprechender seitlicher Führung der Lamellen 8 eine hohe Steifigkeit auf und ist dennoch durch Zusammenlegen der Lamellen, beispielsweise im hinteren Teil des Fahrzeuges, auf kleinstem Raum verstaubar, wobei der Verdeckstoff 12 für die flexible Verbindung und Dichtigkeit sorgt.

### Bezugszeichenliste

- 1: Verdeck
- 2: Verdeckstoff
- 3: Trägergewebe (von 2)
- 4: Schicht (an 2)
- 5: (vorderes) Festelement
- 6: (mittleres) Festelement
- 7: (hinteres) Festelement
- 8: Lamelle
- 9: Grundkörper (von 8)
- 10: Schicht (an 8)
- 12: Verdeckstoff
- 13: Trägergewebe (von 12)
- 14: Schicht (an 12)
- 15: Grundkörper (von 5)
- 16: Grundkörper (von 6)
- 17: Grundkörper (von 7)
- 25: Schicht (an 5)
- 26: Schicht (an 6)
- 27: Schicht (an 7)

## Patentansprüche

1. Flexibles Verdeck (1 bzw. 11) eines Fahrzeugs mit einem Verdeckstoff (2 bzw. 12), der wenigstens eine Schicht (4 bzw. 14) aus einem schweißbaren Kunststoff aufweist, und mit wenigstens einem an dem Verdeckstoff (2 bzw. 12) befestigten Festelement (5, 5, 7 bzw. 8), **dadurch gekennzeichnet**, daß das Festelement (5, 6, 7 bzw. 8) an wenigstens einer Fläche eine Schicht (25, 26, 27 bzw. 10) aus einem mit der Kunststoff-Schicht (4 bzw. 14) des Verdeckstoffs (2 bzw. 12) direkt verschweißbaren Kunststoff aufweist.

2. Flexibles Verdeck nach Anspruch 1, **dadurch gekennzeichnet**, daß die Schicht (4) an der Unterseite des Verdeckstoffs (2) unter einem textilen Trägergewebe (3) angeordnet ist.

3. Flexibles Verdeck nach Anspruch 1 oder 2, **dadurch gekennzeichnet**, daß das Festelement (5, 6 und 7) eine Aussparung zur Aufnahme der verschweißbaren Kunststoff-Schicht (25, 26 und 27) aufweist.

4. Flexibles Verdeck nach einem der vorhergehenden Ansprüche, **dadurch gekennzeichnet,** daß die verschweißbare Kunststoff-Schicht (25, 26, 27 bzw. 10) am Festelement (5, 6, 7 bzw. 8) in Form eines Zweikomponenten- oder Mehrkomponenten-Spritzgießverfahrens erzeugt wird.

5. Flexibles Verdeck nach einem der vorhergehenden Ansprüche, **dadurch gekennzeichnet,** daß die Schicht (4 bzw. 14) am Verdeckstoff (2 bzw. 12) aus Polyvinylchlorid (PVC) besteht.

6. Flexibles Verdeck nach einem der vorhergehenden Ansprüche, **dadurch gekennzeichnet,** daß die verschweißbare Kunststoff-Schicht (25, 26, 27 bzw. 10) am Festelement (5, 6, 7 bzw. 8) aus Polyvinylchlorid (PVC) besteht.

7. Flexibles Verdeck nach einem der vorhergehenden Ansprüche, **dadurch gekennzeichnet,** daß das Verschweißen der Schichten (4, 25, 26, 27 bzw. 14 und 10) durch Heißpress-, Hochfrequenz-, Infrarot- oder Ultraschallschweißen erfolgt.

8. Flexibles Verdeck nach einem der vorhergehenden Ansprüche, **dadurch gekennzeichnet,** daß der Verdeckstoff (12) an seiner Oberseite die Schicht (14) aus schweißbarem Kunststoff aufweist, mit der wenigstens ein Festelement (Lamelle 8) mit der an seiner Unterseite vorgesehenen Schicht (10) direkt verschweißbar ist.
